# EUROPÄISCHE PATENTSCHRIFT

(11) **EP 2 249 485 B1**
(45) Veröffentlichungstag und Bekanntmachung des Hinweises auf die Patenterteilung: **17.04.2013**
(21) Anmeldenummer: 10162136.5
(22) Anmeldetag: 06.05.2010
(51) Int. Cl.: H04B 3/46, H04L 1/00, H04L 27/26

(54) **Verfahren zur Ermittlung einer Datentransferrate**
Method for determining a data transfer rate
Procédé de détermination du taux de transfert de données

(30) Priorität: 06.05.2009 DE 102009019879
(43) Veröffentlichungstag der Anmeldung: 10.11.2010
(73) Patentinhaber: Vodafone Holding GmbH, 40213 Düsseldorf (DE)
(72) Erfinder: Bourlakos, Christos, 61267 Neu-Anspach (DE)
(74) Vertreter: Jehle, Volker Armin

(56) Entgegenhaltungen:
- EP-A1- 1 630 968
- US-B1- 6 636 603

## Beschreibung

Die Erfindung betrifft ein Verfahren zur Ermittlung einer Datentransferrate für einen Anschlusspunkt in einem Netz zur Datenübertragung, insbesondere der zu erwartenden maximalen Datentransferrate an einem Ort in einem leitungsgebundenen Netz.

Seit der Entwicklung preiswerter und leistungsstarker digitaler Signalprozessoren haben diese immer stärker Einzug in das tägliche Leben gehalten. Beispielsweise verfügen in den Industrieländern Europas und Nordamerikas mehr als die Hälfte der Haushalte über mindestens einen sogenannten PC. Insbesondere in den letzten Jahren sind diese PCs so leistungsstark geworden, dass sie große Datenmengen schnell verarbeiten können und damit schnelle Datentransferraten in Netzwerken unterstützen.

Damit einhergehend hat sich das zum einen das Angebot an Datendiensten beständig erhöht. So ist beispielsweise das Internet stark gewachsen und bietet eine Vielzahl an Möglichkeiten große Datenmengen zu transferieren. Dateien können von einem Server im Internet auf einen lokalen PC geladen werden, um diese Daten anschließend auf dem PC weiter zu nutzen. Beispielsweise können ausführbare Programme geladen und ausgeführt werden oder Musikstücke können geladen und gespeichert werden. Weiterhin bietet das Internet immer häufiger Möglichkeiten, für die eine hohe Datentransferrate notwendig ist.

Nahezu gleichzeitig mit der Entwicklung der leitungsgebundenen Datendienste entstanden Funknetze, die eine drahtlose Übermittlung von Daten zu verschiedenen Geräten wie beispielweise mobilen Telefonen oder sogenannten PDAs (Personal Digital Assistant) ermöglichen oder mobilen Computern mit entsprechender Ausstattung ermöglichen. Die Grenzen zwischen mobilen Computern und mobilen Telefonen sind dabei fließend.

Während beim Laden einer Datei auf den lokalen Computer eine hohe Transferrate zwar eine kurze Zeitdauer für das Laden, den sogenannten "Download", bewirkt und damit als komfortabel empfunden wird, ist bei verschiedenen Anwendungen eine minimale Transferrate für eine störungsfreie Funktionalität notwendig. Werden beispielsweise Sprachdaten eines Telefongespräches in Datenpaketen über das Netz zwischen den Gesprächsteilnehmern übertragen, so muss eine schnelle Verbindung, also eine hohe Datentransferrate gegeben sein, so dass zwischen den Datenpaketen keine großen zeitlichen Lücken entstehen und die Sprachausgabe verzerrt und unverständlich wird. Letztlich würde eine zu geringe Transferrate dazu führen, dass die Anwendung nicht sinnvoll betrieben werden kann.

Eine hohe Transferrate ist weiterhin notwendig, wenn große Datenströme lückenlos über einen längeren Zeitraum transportiert werden sollen, beispielsweise zur Übertragung von Video- oder Audiodaten. Beispielsweise ermöglicht das Internet das Sehen von Fernsehkanälen oder das Abrufen von Filmen, die dann als Datenstrom von einem Server zu einem PC geliefert werden. Bei zu geringer Transferrate, insbesondere in der Richtung vom Netz, also beispielsweise dem Internet, zu dem lokalen Computer führt bei der Betrachtung eines Films beispielsweise zu stockenden und/oder springenden Bildern, da die wiederzugebenden Daten nicht ausreichend schnell zu dem Computer übertragen werden.

Zur Erreichung hoher Transferraten werden komplexe Übertragungsprotokolle eingesetzt. Obwohl sich die Übertragungsprotokolle für die leitungsgebundene Übertragung von den Protokollen für die drahtlose Übertragung unterscheiden, weisen diese die gemeinsame Eigenschaft auf, dass sie anfällig für Störungen sein können.

Die Transferrate von und zu einem lokalen Computer, der mit einem Datennetz verbunden ist, hängt dementsprechend stark von den Übertragungseigenschaften des letzten Verbindungsstücks vom Datennetz zu dem lokalen Computer ab, da die Übertragung auf diesem letzten Stück häufig individuelle Eigenschaften aufweist.

Betreiber von Datenübertragungsnetzen, beispielsweise sogenannte Internetprovider oder Mobilfunkprovider, bieten ihren Kunden die Anbindung an ihr Datennetz an. Dabei sind die Angebote für eine Anbindung üblicherweise gestaffelt nach maximal möglichen Datenübertragungsraten. Damit entsteht das Problem, dass die tatsächlich maximal erreichbare Datentransferrate auch von den

Übertragungseigenschaften des letzten Verbindungsstückes zwischen dem Datenübertragungsnetz und dem Kunden abhängt, diese Übertragungseigenschaften dem Netzbetreiber jedoch häufig nicht im Detail bekannt sind. Zwar besteht die theoretische Möglichkeit die Übertragungseigenschaften einer Verbindung durch Messungen zu ermitteln, jedoch ist eine solche Messung zum einen nur mit Hilfe des Kunden möglich zum anderen sind solche Messungen mit erheblichem Aufwand verbunden. Demzufolge sind Messungen zur Ermittlung einer tatsächlich maximal erreichbaren Datentransferrate häufig nicht praktikabel.

Es besteht damit die Aufgabe ein praktikables Verfahren zur Ermittlung der maximal erreichbaren Datentransferrate für einen Anschlusspunkt in einem leitungsgebundenen Datennetz vorzuschlagen.

Die US 6,636,603 B1 beschreibt ein System zur Ermittlung der Übertragungsleistung eines Modems, welches an einer verdrillten Zweidrahtleitung betrieben wird. Das System umfasst einen Kommunikationsserver, der an eine erste und eine zweite Teilnehmerleitung gekoppelt ist. Der Kommunikationsserver umfasst ein Kommunikationsgerät, welches ein Signal über die erste Teilnehmerleitung sendet. Ein Speicher, der mit dem Kommunikationsserver verbunden ist, speichert Rausch- und Übersprechinformation für die erste und zweite Teilnehmerleitung. Ein Prozessor, der mit dem Speicher verbunden ist, ermittelt die Übertragungsleistung des Kommunikationsgerätes basierend auf der Rausch- und Übersprechinformation.

Die EP 1 630 968 A1 beschreibt ein Ermittlungsgerät zur Ermittlung von Übersprechen, das in oder an einen Anschlussknoten (DSLAM) anschließbar ist. Das Gerät ermittelt automatisch quantitative Informationen, die ein Übersprechen zwischen denjenigen Leitungen anzeigen, die mit dem Anschlussknoten verbunden sind. Diese Information kann bei jedem ein/aus-Statuswechsel der Leitung aus einem Anschlussknoten MIB extrahiert werden und kann optional verwendet werden, um die Leitungen in virtuelle Binder zu gruppieren.

### KURZBESCHREIBUNG DER FIGUREN

Die nachfolgend beschriebene Erfindung wird anhand der Figuren näher erläutert. Dabei zeigen:
- Figur 1:: Blockschaltbild eines leitungsgebundenen Datenübertragungsnetzes;
- Figur 2:: Schema eines Funknetzes.

### BESCHREIBUNG

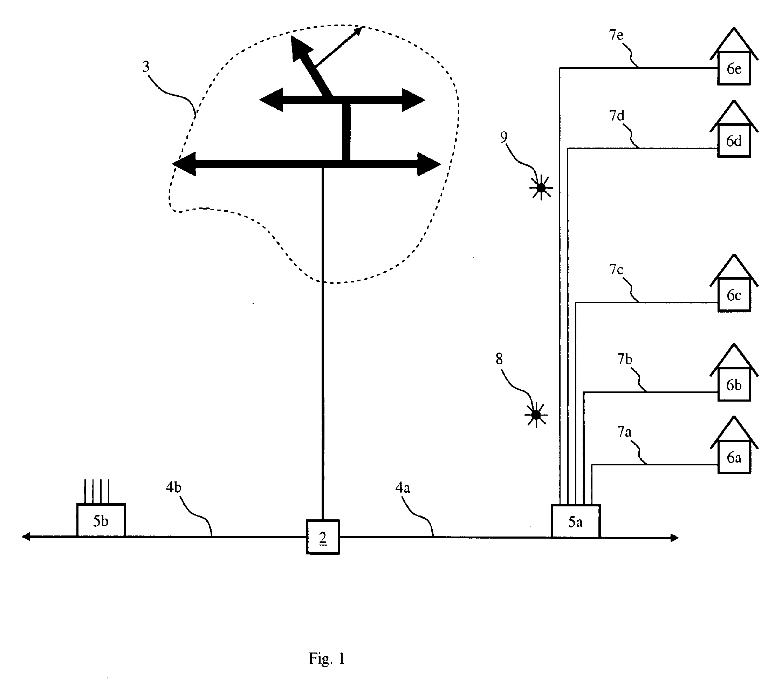

Figur 1 zeigt ein schematisches Blockschaltbild 1 eines Leitungsnetzes zur Übertragung digitaler Daten zu Anschlusspunkten, hier zu Teilnehmeranschlüssen. Insbesondere kann es sich bei dem beschriebenen Leitungsnetz beispielsweise um ein Netz zur Datenübertragung nach einem xDSL-Standard (Digital Subscriber Line) handeln, wobei XDSL zusammenfassend für die Übertragungsprotokolle der DSL-Familie, also ADSL oder VDSL oder HDSL oder SDSL steht. Für die Datenübertragung im letzten Verbindungsabschnitt beispielsweise nach dem ADSL - Asymmetric Digital Subscriber Line - Standard kann beispielsweise das bestehende leitungsgebundene Telefonnetz verwendet werden.

Eine Ortsnetzvermittlungsstelle 2 ist mit dem Kern-Netz 3 eines Netzbetreibers verbunden, welches wiederum beispielsweise mit dem Internet und anderen Kern-Netzen anderer Netzbetreiber verbunden ist. Innerhalb eines solchen Kern-Netzes 3 werden Telefonie- und Internetdaten analog oder digital übermittelt, wobei moderne Netze alle Daten aufgrund der verfügbaren hohen Verarbeitungsgeschwindigkeiten fast nur noch digital übermitteln. Das Kern-Netz 3 sei dabei für die schnelle Datenübertragung ausgelegt.

Die Ortsnetzvermittlungsstelle 2 ist über sogenannte Hauptkabel 4a bzw. 4b mit Kabelverzweigern 5a und 5b verbunden. Ein Hauptkabel kann dabei beispielsweise als Lichtleitfaser oder als Bündel von metallischen Leitern ausgebildet sein, sodass eine Vielzahl gleichzeitiger Verbindungen über ein Hauptkabel geführt werden kann.

Kabelverzweiger 5a bzw. 5b verbinden jeweils eine Vielzahl von Teilnehmeranschlüssen über Verzweigungskabel mit einem Hauptkabel, so dass jeder Teilnehmeranschluss letztlich über einen Kabelverzweiger und eine Ortsvermittlungsstelle mit einem Kern-Netz eines Netzbetreibers und damit mit dem Internet und dem weltweiten Telefonnetz verbunden ist. In dem hier gezeigten Beispiel verbindet der Kabelverzweiger 5a beispielsweise die Teilnehmeranschlüsse 6a bis 6e über die Verzweigungskabel 7a bis 7e mit dem Hauptkabel 4a. Die Teilnehmeranschlüsse 6a bis 6e bilden damit Endpunkte des gesamten Netzes.

Die Länge der Verzweigungskabel 7a bis 7e zu den jeweiligen Teilnehmeranschlüssen 6a bis 6e seien in diesem Ausführungsbeispiel von unterschiedlicher Länge. Dabei sei die Länge des Verzweigungskabels 7e länger als diejenige des Verzweigungskabels 7d, diese wiederum sei länger als die Länge des Verzweigungskabels 7c etc, so dass das Verzweigungskabel 7a das kürzeste und das Verzweigungskabel 7e das längste sei.

Die Verzweigungskabel 7a bis 7e sind dabei üblicherweise als zweiadrige oder mehradrige Kupferkabel ausgebildet. Insbesondere bei Anschlüssen, die vor der Entwicklung der DSL-Standards als Anschlüsse für reine Telefonieanwendungen erstellt wurden, sind zwei- oder vieradrige Kupferkabel als Verzweigungskabel 7a-7e verbaut worden. Von diesen Kupferkabeln werden zwei Adern zur Übertragung sowohl herkömmlicher, analoger Telefoniesignale als auch zur Übertragung digitaler Signale wie beispielsweise IDSN oder xDSL verwendet.

Zur Übertragung von Daten nach dem ADSL Verfahren zu den Teilnehmeranschlüssen weisen diese in herkömmlicher Weise einen sogenannten Splitter zur frequenzweisen Aufteilung der Signale auf, da Telefoniedaten der analogen Telefonie im Frequenzbereich bis ca. 4 kHz bzw. digitale Daten des ISDN im Frequenzbereich bis 132 kHz und digitale ADSL Daten im Frequenzbereich bis ca. 1,1 MHz übertragen werden. Die Übertragung digitaler Daten nach dem ADSL Standard findet beispielsweise in Deutschland im Frequenzbereich von 138 kHz bis ca. 1,1 MHz statt. Neuere Verfahren nutzen sogar einen Frequenzbereich bis ca. 2,2 MHz. Der Splitter teilt dementsprechend die Signale bei 138 kHz in analoge Telefoniesignale bzw. ISDN-Signale, die im Frequenzbereich unterhalb von 138 kHz liegen, sowie in ADSL Signale oberhalb von 138 kHz, um diese zur weiteren Verarbeitung an eine analoge Telefon- oder ISDN-Anlage bzw. an ein ADSL-Modem weiter zu leiten.

Zur Übertragung der DSL-Signale ist der Frequenzbereich oberhalb von 138 Khz in eine Vielzahl von 4,3125 kHz breiten Frequenzbändern unterteilt, wobei in jedem dieser Bänder die Mittenfrequenz als Trägersignal zur Datenübertragung moduliert wird. Auf dieser Weise wird eine Vielzahl von Kanälen erstellt, die gleichzeitig genutzt werden können.

Bei der Übertragung der ADSL-Signale über die Kupferleitungen einer Verzweigungsleitung werden diese gestört und verzerrt; letztlich waren die Kupferleitungen nicht für hohe Übertragungsfrequenzen, sondern zur Übertragung analoger Telefoniedaten ausgelegt. Störungen und Verzerrungen können beispielsweise durch Übersprechen bewirkt werden, also das kapazitive oder induktive Einkoppeln von Signalen auf benachbarten Leitungen.

Die Verzerrung von Signalen wird beispielsweise auch durch Leitungskapazitäten und Leitungsinduktivitäten bewirkt, sodass mit zunehmender Leitungslänge und damit größer werdenden Leitungskapazitäten und -induktivitäten Signale in hohen Frequenzbändern nicht mehr nutzbar sind, da die Leitungen selbst als analoge Filter wirken und Signale dämpfen. Dementsprechend nimmt mit zunehmender Länge einer Verzweigungsleitung die Anzahl der nutzbaren Frequenzbänder ab, so dass sich beispielsweise bei einer Leitungslänge von 6 km die maximal erreichbare Übertragungsrate auf 10% verringert. Demzufolge wird die maximal erreichbare Datentransferrate des Teilnehmeranschlusses 6d, der geographisch weiter von dem Kabelverzweiger entfernt ist als der Teilnehmeranschluss 6a, geringer sein als die maximal erreichbare Datentransferrate zum Teilnehmeranschluss 6a.

Das ADSL Übertragungsprotokoll ermittelt in bekannter Weise beim Aufbau einer Verbindung zwischen einem DSL-Modem am Teilnehmeranschluss und dem Kabelverzweiger bzw. dem DSLAM in der Vermittlungsstelle die nutzbaren Frequenzbänder, sodass für den nachfolgenden Datenaustausch nur diese zur Signalübertragung genutzt werden. Beispielsweise werden so für geographisch weite Entfernungen regelmäßig nur die unteren Frequenzbänder ermittelt und später genutzt, da Signale in Bändern höherer Frequenzen aufgrund der schlechten Übertragungseigenschaften der Kupferleitungen zu stark verzerrt sind. Auf diese Weise wird die tatsächlich maximale Transferrate bei jedem Verbindungsaufbau zwischen einem DSL-Modem und einem DSLAM ermittelt.

Zur Ermittlung der zu erwartenden maximalen Datentransferrate von und zu einem Teilnehmeranschluss, zu dem es von einem bestimmten Netzbetreiber bislang noch keinen Aufbau einer Verbindung gab, wird die zu erwartende Datentransferrate auf der Basis tatsächlich ermittelter maximaler Datentransferraten von geographisch naheliegenden Teilnehmeranschlüssen ermittelt.

Sind beispielsweise die maximal erreichbaren Transferraten für die Teilnehmeranschlüsse 6b und 6d bekannt, so kann die zu erwartende maximale Transferrate für den Teilnehmeranschluss 6c durch Mittelwertbildung der bekannten Transferraten der Anschlüsse 6b und 6d ermittelt werden. Dabei sei die maximal erreichbare Transferrate des Teilnehmeranschlusses 6b größer als diejenige des Anschlusses 6d, da die Länge der Leitung 7b kürzer als die Länge der Leitung 7d ist und folglich die Übertragungseigenschaften der Leitung 7d schlechter als für Leitung 7b sind. Da die Länge des Verzweigungskabels 7c länger als diejenige des Kabels 7b und kürzer als das Verzweigungskabel 7d ist, ist die Dämpfung durch das Kabel 7c stärker als diejenige durch das Kabel 7b und geringer als diejenige durch das Kabel 7d.

Weiterhin stört eine Störquelle, beispielsweise am Ort 8, die einen Datentransfer zu Anschluss 6b stört, häufig auch den Datentransfer zu Anschluss 6c, da die Verzweigungskabel zu nahe beieinander liegenden Teilnehmeranschlüssen häufig über große Strecken parallel geführt werden. Störquellen, beispielsweise am Ort 9, die weiter entfernt von einem Kabelverzweiger liegen, stören jedoch häufig nur weiter entfernte Teilnehmeranschlüsse.

Die Übertragungseigenschaften der Kabelverbindung zum Teilnehmeranschluss 6c werden damit schlechter als diejenigen zum Teilnehmeranschluss 6b und besser als diejenigen zum Teilnehmeranschluss 6d sein, so dass die zu erwartende maximale Datenübertragungsrate für den Teilnehmeranschluss 6c damit zwischen derjenigen für Teilnehmeranschluss 6b ermittelten und derjenigen für Teilnehmeranschluss 6d ermittelten liegen wird. Die Datenübertragungsrate zum Teilnehmeranschluss 6c kann somit im einfachsten Fall durch Mittelwertbildung der bekannten Datenübertragungsraten zu den Teilnehmeranschlüssen 6b und 6d ermittelt werden.

Ein genaueres Ergebnis kann durch Interpolation und unter Berücksichtigung weiterer gemessener Übertragungsraten nahe liegender Teilnehmeranschlüsse erreicht werden. Beispielsweise können für die Interpolation zur Ermittlung der zu erwartenden maximalen Datenübertragungsrate neben den für die Teilnehmeranschlüsse 6b und 6d auch die für die Teilnehmeranschlüsse 6a und 6e gemessenen maximalen Datenübertragungsraten berücksichtigt werden. Dabei erlaubt die Interpolation gemessener Werte die Ermittlung einer mathematischen Abbildungsfunktion, welche die gemessenen Werte erfasst, sodass der Kurvenverlauf zwischen den Messpunkten die maximal erreichbare Datentransferrate für Orte zwischen den vermessenen Orten wiedergibt.

Alternativ kann für Orte, die nicht zwischen sondern außerhalb der vermessenen Orte die zu erwartende maximale Datenübertragungsrate durch Extrapolation der Abbildungsfunktion ermittelt werden. So kann beispielsweise die für den Teilnehmeranschluss 6e zu erwartende maximale Datenübertragungsrate durch Extrapolation der für die Teilnehmeranschlüsse 6a bis 6d bereits ermittelten maximalen Übertragungsraten ermittelt werden. Aufgrund der zunehmenden Leitungslängen der Teilnehmeranschlüsse 6a bis 6d lässt sich extrapolieren, dass die für den Teilnehmeranschluss 6e zu erwartende maximale Datenübertragungsrate unterhalb derjenigen des Teilnehmeranschlusses 6d liegt. Dabei kann über die bekannten Werte der Teilnehmeranschlüsse 6a bis 6d eine Kurve gelegt werden, die für Anschluss 6e extrapoliert wird. Die Extrapolation einer solchen Kurve liefert dabei genauere Ergebnisse, da die Tendenz der Übertragungseigenschaften durch die Kurve genauer nachgebildet wird.

Auf diese Weise kann ein Verfahren zur Ermittlung einer Datentransferrate für einen ersten Anschlusspunkt eines Leitungsnetzes durchgeführt werden, wobei die maximal erreichbare Datentransferrate an mindestens einem weiteren, in der Nähe des ersten Anschlusspunktes gelegenen Anschlusspunkt des Leitungsnetzes gemessen und die Datentransferrate an dem ersten Anschlusspunkt basierend auf der gemessenen Datentransferrate ermittelt wird.

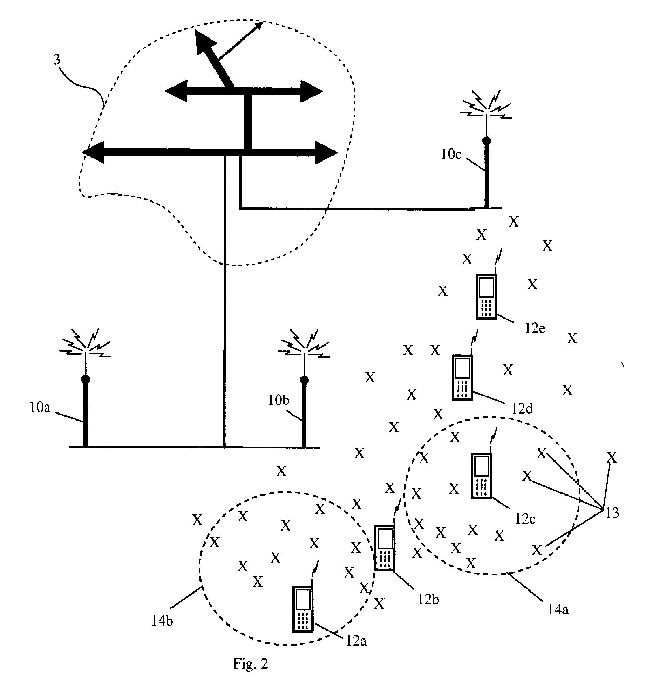

Figur 2 zeigt eine Anordnung aus dem Stand der Technik zur Ermittlung der zu erwartenden maximalen Datenübertragungsrate für die drahtlose Datenübertragung, Übertragung also beispielsweise per Funk, von einer zentralen Sende/Empfangsstation zu einem Terminal.

Eine Vielzahl von Sende- und Empfangsstationen 10a bis 10c ist mit einem Netzwerk 11 verbunden, welches die Sende- und Empfangsstation 10a-10c steuert und auch die Datenübertragung zwischen den Stationen 10a-10c sicherstellt. Die Stationen decken mit ihrem jeweiligen Funksignal jeweils ein begrenztes Gebiet ab, wobei Gebiete benachbarter Stationen überlappen können. Jedes der Terminals 12a bis 12e ist jeweils mit mindestens einer der Sende- und Empfangsstationen 10a-10c über einen Kanal verbunden, über den das Terminal Daten mit der Sende- und Empfangsstation austauschen kann.

Ein solches Netzwerk kann beispielsweise ein sogenanntes Mobilfunknetzwerk sein, in welchem Telefonie- und andere Daten zwischen den Terminals und über das Netzwerk 11 übertragen werden können, wobei die Datenübertragung zwischen den Sende- und Empfangsstationen 10a-10c und den Terminals nach dem GSM- oder HSCSD- oder GPRS- oder EDGE- oder UMTS- oder HSDPA- oder Wimax-Protokoll stattfinden kann.

Die Terminals 12a bis 12e können dementsprechend Mobiltelefone oder jeweils entsprechend ausgerüstete Computer sein, die mobil oder stationär sein können. Die Daten können dabei sowohl Sprachdaten wie auch andere Daten, beispielsweise Dateien zur weiteren Verarbeitung mit Programmen auf einem Computer oder sonstige beliebige Daten sein, die zwischen einem Terminal und einer Sende/Empfangsstation übermittelt werden.

Diese Funknetze weisen die gemeinsame Eigenschaft auf, dass die maximal mögliche Datentransferrate zwischen einem Terminal 12a-12e und einer Sende/Empfangsstation 10a-10c von der Funksignalstärke und -integrität abhängt. Signalintegrität bezeichnet dabei wie stark ein Funksignal gestört und verzerrt ist. So kann ein Funksignal durch eine Vielzahl von Störquellen verzerrt werden, beispielsweise durch Funksignale anderer Sender auf gleicher Frequenz, Überlagerung mit Reflexionen von sich selbst, Brechung oder Reflexion an Kanten und Flächen. Neben diesen Störungen wird ein Funksignal während seiner Ausbreitung beispielsweise in Abhängigkeit der Entfernung zur verbundenen Sende- und Empfangsstation gedämpft, so dass auch hier die Signalstärke mit zunehmender Entfernung von der verbundenen Sende- und Empfangsstation abnimmt, und wegen der Dispersion der Signale verzerrt wird.

Diese an sich bekannten Effekte führen beispielsweise dazu, dass eine Sende- und Empfangsstation innerhalb einer Stadt ein deutlich kleineres Gebiet abdecken kann als außerhalb einer Stadt, da beispielsweise Gebäude Signale abschirmen, reflektieren und brechen. Dabei ist aufgrund der Vielzahl möglicher Störquellen eine genaue analytische Ermittlung der maximal möglichen Datenübertragungsrate für einen Ort nur mit erheblichem Aufwand möglich und für eine Fläche nicht praktikabel.

Die an einem Ort maximal erreichbare Datenübertragungsrate kann für ein Übertragungssystem, also beispielsweise für einen der oben genannten Übertragungsstandards, durch Messungen mit herkömmlichen Messverfahren und Messgeräten ermittelt werden.

Für einen Ort, also einen geographischen Punkt, für den die maximal erreichbare Datentransferrate nicht durch Messung ermittelt wurde, kann diese im einfachsten Fall durch Mittelwertbildung basierend auf gemessenen Datentransferraten an zwei oder mehr nahe liegenden Orten ermittelt werden.

Sind beispielsweise die maximal erreichbaren Datentransferraten an den Orten 12a und 12c bekannt, so kann mittels Mittelung oder mittels Interpolation der bekannten Datenübertragungsraten für den Ort 12b die voraussichtliche maximale Datenübertragungsrate ermittelt werden, die zahlenmäßig zwischen den ermittelten Datenübertragungsraten liegen wird. Sind jedoch die maximal erreichbaren Übertragungsraten an den Orten 12b und 12c bekannt, so können diese Werte zur Ermittlung der zu erwartenden maximalen Datenübertragungsrate am Ort 12a extrapoliert werden. Die Mittelwertbildung von Messwerten und die Interpolation sowie die Extrapolation von Messwerten kann dabei auf mehr als zwei Messwerte gestützt werden.

Zur Ermittlung der zu erwartenden maximalen Datentransferrate beispielsweise an dem Ort 12c werden daher Datentransferraten an Orten gemessen, die in einem Gebiet nahe an dem gewünschten Ort, also 12c, liegen. Damit ergibt sich für ein Gebiet ein Anzahl von Punkten 13 - in der Figur mit X gekennzeichnet und exemplarisch nur in der Nähe der Orte 12 eingezeichnet - an denen die maximal erreichbare Datentransferrate gemessen und damit bekannt ist.

Die Interpolation oder Extrapolation dieser Messwerte für einen gewünschten Ort kann damit auf eine Vielzahl von Messwerten gestützt werden, die für Orte rund um den gewünschten Ort gemessen wurden. So kann beispielsweise für den Ort des Terminals 12c die zu erwartende Datentransferrate aus einer Vielzahl 14a von Messwerten X ermittelt werden, wobei die an dem Ort 12c zu erwartende maximale Datentransferrate durch Interpolation der Messwerte an den Orten X berechnet wird. Für einen Ort, beispielsweise den Ort 12a, der nicht innerhalb der Vielzahl der Messpunkte X liegt, kann die zu erwartende Datentransferrate durch Extrapolation von Messwerten 14b berechnet werden. In an sich bekannter Weise wird das Ergebnis einer solchen Interpolation oder Extrapolation genauer, je näher die Messpunkte an dem gewünschten Ort liegen und je mehr dieser Messpunkte herangezogen wurden.

Auf diese Weise kann ein Verfahren zur Ermittlung der maximalen Datentransferrate an einem ersten Ort in einem Funknetz durchgeführt werden, wobei die maximal erreichbare Datentransferrate an mindestens zwei weiteren, in geographischer Nähe zu dem ersten Ort gelegenen Orten, gemessen und die Datentransferrate an dem ersten Ort basierend auf den gemessenen Datentransferraten ermittelt wird.

Ein solches Verfahren zur Ermittlung der zu erwartenden maximalen Datentransferrate an einem Ort kann beispielsweise in einem Computerprogramm nachgebildet und mittels eines geeigneten Computers ausgeführt werden. Mathematische Verfahren zur Mittelwertbildung sowie Ermittlung einer Abbildungsfunktion für die Interpolation oder Extrapolation, die eine Vielzahl von Messwerten erfasst, insbesondere auch von dreidimensional angeordneten Messwerten, sind hinreichend bekannt und können in herkömmlicher Weise in einem Computerprogramm implementiert werden. Damit kann ein Computerprogramm implementiert werden, welches auf Basis der gemessenen maximalen Datentransferraten die zu erwartende maximale Datentransferrate für einen beliebigen Ort des Netzes ermittelt.

## Patentansprüche

1. Verfahren zur Ermittlung einer Datentransferrate für einen ersten Anschlusspunkt (6c) eines Leitungsnetzes, **gekennzeichnet durch**,
Messen der Datentransferrate an mindestens zwei weiteren, in der Nähe des ersten Anschlusspunktes gelegenen Anschlusspunkten (6a, 6b, 6d, 6e) des Leitungsnetzes, wobei der erste sowie die mindestens zwei weiteren Anschlusspunkte mittels parallel verlaufender Teilnehmeranschlussleitungen (7a-7e) mit demselben Kabelverzweiger (5a) verbunden sind;
Ermitteln einer mathematischen Abbildungsfunktion, welche die gemessenen Datentransferraten erfasst, und
Ermitteln der Datentransferrate an dem ersten Anschlusspunkt **durch** Interpolation oder **durch** Extrapolation der mathematischen Abbildungsfunktion.

2. Verfahren nach einem der vorstehenden Ansprüche, wobei die Datentransferrate an mindestens drei weiteren Anschlusspunkten (6a, 6b, 6d, 6e) des Leitungsnetzes ermittelt wird.

3. Datenträger mit einem darauf gespeicherten Programm zur Ermittlung einer Datentransferrate nach einem der vorstehenden Ansprüche.

## Claims

1. A method for determining a data transfer rate for a first connection point (6c) of a line network, **characterized by**
measuring the data transfer rate on at least two further connection points (6a, 6b, 6d, 6e) of the line network which are positioned in the vicinity of the first connection point, wherein the first connection point as well as the at least two further connection points are connected with the same feeder distribution interface (5a) by means of parallel subscriber lines (7a-7e);
determining a mathematical mapping function including the data transfer rates measured, and
determining the data transfer rate at the first connection point by interpolation or by extrapolation of the mathematical mapping function.

2. The method according to any of the preceding claims, wherein the data transfer rate is determined on at least three further connection points (6a, 6b, 6d, 6e) of the line network.

3. A data carrier having stored thereon a program for determining a data transfer rate according to any of the preceding claims.

## Revendications

1. Procédé de détermination d'un taux de transfert de données pour un premier point de branchement (6c) d'un réseau de lignes de transmission, **caractérisé par**
la mesure du taux de transfert de données au niveau d'au moins deux autres points de branchement (6a, 6b, 6d, 6e) du réseau de lignes de transmission qui sont situés à proximité du premier point de branchement, le premier ainsi que lesdits au moins deux autres points de branchement étant reliés au même boîtier de distribution (5a) au moyen de lignes d'abonné (7a-7e) en parallèle ;
la détermination d'une fonction mathématique de représentation qui couvre les taux de transfert de données mesurés, et
la détermination du taux de transfert de données au niveau du premier point de branchement par interpolation ou par extrapolation de la fonction mathématique de représentation.

2. Procédé selon l'une des revendications précédentes, dans lequel le taux de transfert de données est déterminé au niveau d'au moins trois autres points de branchement (6a, 6b, 6d, 6e) du réseau de lignes de transmission.

3. Support de données sur lequel est mémorisé un programme pour la détermination d'un taux de transfert de données selon l'une des revendications précédentes.
